# EUROPEAN PATENT APPLICATION

(11) **EP 3 444 727 A1**
(43) Date of publication of application: **20.02.2019**
(21) Application number: 17186976.1
(22) Date of filing: 18.08.2017
(51) Int. Cl.: G06F 17/28, G06F 17/27

(54) **A REVISION SYSTEM AND METHOD FOR REVISING TRANSLATED TEXTS**

(71) Applicant: Televic Education NV, 8870 Izegem (BE)
(72) Inventor: Vanlerberghe, Filip Robert Maria, 8860 Lendelede (BE); Wylin, Bert Guillaume Jozef Gerard, 8510 Rollegem (BE); Verbeke, Dirk Herman Katelijne, 9890 Dikkelvenne (BE)
(74) Representative: IP HILLS NV

(57) **Abstract**

There is described a revision system (1) and method for revising translated texts (12) which, upon input of a translation error (20) for one particular translated text of the set (10), stores this translation error associated with this particular translated text in a revision memory (32) and searches the other translated texts of the set for the presence of this translation error.

## Description

### Technical Field

This invention relates to a revision system and method for revising translated text. More particularly it relates to a revision system and method as in use to revise a plurality of translated texts by different translators based on the same source text.

### Background

A revision method and system for a plurality of translated texts produced by different translators for the same source text are especially useful in an educational context for the training, revising and testing of student translators. It is however clear that such revision methods and systems are also useful in alternative applications, such as for example as a revision system to enable comparison of the performance of a plurality of translators, etc.

A prior art revision system is for example known from Adam Obrusnik, "A hybrid approach to parallel text alignment", Bachelor's Diploma Thesis, Masaryk University Faculty of Arts, 2012, as retrievable from https://is.muni.cz/th/356468/ff_b/Obrusnik_Automatic_alignment_BA_Thesis.pdf This system is marketed as the hypal system and provided as an online tool on www.hypal.eu presents the source text and a translated text of this source text in an aligned way to a revisor. As described in "section 4 HYPAL" of Simon Javora, "Defining an Error Typology: the Case of CELTraC", Bachelor's Diploma Thesis, Masaryk University Faculty of Arts, 2015, the revisor can subsequently input translation errors by marking or highlighting the problematic word or expression in an error tagging interface for just one text. The marked translation error can be assigned an error category. The translation error is then highlighted with a particular color associated to the error category. Optionally, a correction can be inserted along with the marked translation error. This allows a teacher, by means of an error statistics section, to view and analyze frequencies of different error categories in one specific text or translation for one specific translator.

A further known prior art system is for example known from as the system marketed under the name Matecat, which is a machine translation system which automatically translates at least a part of a source text segment, and which subsequently allows a translator to post-edit the proposed machine translation. Such a translation system comprises a post-edit module for the translator such as for example described on https://www.matecat.com/support/revising-projects/revising-translation-jobs/ . This allows the translator to post-edit such a machine-translated document in a post-edit mode of a translation editor interface. This translation editor interface thus presents a translator a segment of the source text and a corresponding segment of the machine translated text. The translator, upon detection of translation errors, can then post-edit the machine translated text. A track changes version of the changes made by the translator is shown in the post-edit interface and the translator is able to select a type of translation issue. Based on the type of issues indicated for the modified segments of the translated text by the translator, a basic quality report can be compiled for one translation by one translator showing for each error category that the performance was excellent, acceptable, poor or fail.

When making use of such prior art solutions, revision of a set comprising a plurality of translated texts by different translators of the same source text, especially if the number is relatively large, remains a tedious, repetitive and labour-intensive task for the revisor. It further remains difficult to guarantee consistency, which is for example important when considering scoring in the context of an educational test or hiring assessment. In such a context, it is important that for every translation in the set it can be guaranteed that all identical errors will be found and that the same penalty or negative score will be applied for every identical mistake. Finally, in addition to consistency with respect to scoring, such prior art solutions also do not allow to guarantee consistency with respect to providing possible corrections or constructive feedback for identical translation errors in all translated texts of the set.

There thus still remains a need for an improved revision system and method for revising translated texts, which improves efficiency and consistency, especially when revising a plurality of translated texts by different translators of the same source text.

### Summary

According to a first aspect of the invention, there is provided a revision system for revising translated texts configured to receive:
- a set comprising a plurality of translated texts; and
- translation errors of translated texts,
the revision system comprising:
- a revision module comprising at least one revision memory configured to store translation errors associated with translated texts,
CHARACTERISED IN THAT
the revision system is further configured to, upon input of a translation error comprising a portion of one particular translated text of the set:
- store in at least one revision memory this translation error associated with this particular translated text; and
- search the other translated texts of the set for the presence of this translation error.

In this way it is guaranteed that all the identical or similar translation errors are found in all translated texts of the set. Additionally, this is realized in an efficient way that minimizes repetitive work for the revisor as the system will, for each translated error, automatically search, whether it is also present in the other translated texts of the set. This is especially relevant when the revision system for educational, training, hiring, testing, quality assurance, etc. purposes, such as for example in an education context, at hiring agencies, at translation agencies, etc., when often dozens of translated texts of the same source texts need to be revised consistently. It is clear that such identical or similar translation errors result from the retrieval of the identical or similar portions in the other translate texts during the search for the presence of the inputted translation error comprising this portion of a previously revised translated text

According to an embodiment, there is provided a revision system, wherein the revision system is further configured to:
- present the one or more other translated texts in which this translation error is found to the revisor.

In this way the revisor is able to process an identical or similar translation error in all translated texts of the set in a more efficient and consistent way.

According to a further embodiment, there is provided a revision system, wherein the revision system is further configured to:
- receive from the revisor validation input concerning validation of said translation error when associated with said one or more other translated texts thus presented.

In this way the revisor can, by means of the validation, assure that the automatically identified identical or similar translation errors in the other translated texts of the set are really translation errors, thereby avoiding false hits, for example resulting from a different construction of the translated segment which renders the terminology or expression of a portion of one translated text that was marked as a translation error for this translated text, still correct even when this portion was found in another translated text of the set.

According to still a further embodiment, there is provided a revision system, wherein the revision system is further configured to:
- respectively store in said at least one revision memory said translation errors associated with said one or more other translated texts in function of said validation input.

In this way, the validation, assures that a consistent record of the translation errors is logged for all translated texts in the set in an efficient way.

According to still a further embodiment, there is provided a revision system, wherein the revision system is further configured to receive and store in said at least one revision memory, in association with each translation error, associated error data comprising one or more of the following:
- scoring data comprising data from which a scoring of the translation can be calculated;
- correction data comprising data of the correct translation;
- feedback data comprising further data to inform the translator;
- source language of the source text and target language of the translated text;
- a fragment of the source text causing the translation error;
- a frequency and/or count of the occurrence of the translation error;
- one or more predetermined error categories (63) and/or error sub-categories associated with the translation error.

According to still a further embodiment, there is provided a revision system, wherein the revision system is configured to verify that the revision memory comprises at least partly the same associated error data, for each particular translation error which is associated with a plurality of said translated texts.

In this way it can be guaranteed that all identical or similar translation errors in all translated texts of the set will be identified. It can further be guaranteed that the same scoring data, for example the same penalty or negative score will be used for each identical or similar translation error. Still further it can be guaranteed that the revisors consistently add the same possible corrections for a translation error for every revised translated text and that that every translator, candidate or student receives the same consistent feedback for identical or similar translation errors.

According to still a further embodiment, there is provided a revision system, wherein the revision system is further configured to:
- mark at least one subset of the set comprising a plurality of translated texts as freezed;
- upon input of a translation error for one particular translated text of the set, only searching the other translated texts of the set which are not part of the at least one subset marked as freezed for the presence of this translation error.

In this way it can be assured that particular subsets of translated texts and for example their related scoring data can be consolidated.

According to a further embodiment there is provided a revision system, wherein the revision system is further configured, upon input of a new set of translated texts, to search the translated texts of the new set for the presence of any translation errors previously stored in the at least one revision memories of the revision module.

In this way, translation errors previously stored in the revision memories are also applied to a new set of translated texts. This further improves the level of consistency, as not only an improved level of consistency is achieved within the same set of translated texts, but also the level of consistency of the revision across a plurality of different sets of translated texts is improved. It is further clear that this also allows for an efficient revision as identical or similar translation errors already inputted into the revision memories during revision of one or more previous sets of translated texts can be applied automatically to any new set of translated texts. Similar as described above with reference to newly inputted translation errors, also these previously entered translation errors, when found are preferably presented, validated and stored in a similar way. Preferably, thus the revision system is further configured to:
- present the one or more translated texts of the new set in which such a previously stored translation error is found to the revisor;
- receive from the revisor validation input concerning validation of these previously stored translation errors when associated with the one or more translated texts thus presented; and
- respectively store in said at least one revision memory said translation errors associated with said one or more translated texts of this new set in function of said validation input.

According to a second aspect of the invention there is provided a computer implemented revision method comprising the steps of:
- receiving a set comprising a plurality of translated texts;
- receiving translation errors of translated texts,
- storing in at least one revision memory of a revision module of the revision system translation errors associated with translated texts,
CHARACTERISED IN THAT
upon input of a translation error comprising a portion of one particular translated text of the set, the method comprises the further steps of:
- storing in at least one revision memory this translation error associated with this particular translated text; and
- searching the other translated texts of the set for the presence of this translation error.

This computer implemented revision method and the below mentioned embodiments allow for similar advantages as described above with respect to the related revision system and its corresponding embodiments.

According to an embodiment there is provided a revision method, wherein the method comprises the further steps of:
- presenting the one or more other translated texts in which this translation error is found to the revisor.

According to a further embodiment there is provided a revision method, wherein the revision method comprises the further steps of:
- receiving from the revisor validation input concerning validation of said translation error when associated with said one or more other translated texts thus presented.

According to a further embodiment there is provided a revision method, wherein the revision method comprises the further steps of:
- respectively storing in said at least one revision memory said translation errors associated with said one or more other translated texts in function of said validation input.

According to a further embodiment there is provided a revision method, wherein the revision method comprises the further step of receiving and storing in said at least one revision memory, in association with each translation error, associated error data comprising one or more of the following:
- scoring data comprising data from which a scoring of the translated text can be calculated;
- correction data comprising data of the correct translation;
- feedback data comprising further data to inform the translator;
- source language of the source text and target language of the translated text;
- a fragment of the source text causing the translation error;
- a frequency and/or count of the occurrence of the translation error;
- one or more predetermined error categories and/or error sub-categories associated with the translation error.

According to a further embodiment there is provided a revision method, wherein the revision method comprises the further step of verifying that the revision memory comprises at least partly the same associated error data, for each particular translation error which is associated with a plurality of said translated texts.

According to a further embodiment there is provided a revision method, wherein the method comprises the further steps of:
- marking at least one subset of the set comprising a plurality of translated texts as freezed;
- upon input of a translation error for one particular translated text of the set, only searching the other translated texts of the set which are not part of the at least one subset marked as freezed for the presence of this translation error.

According to a further embodiment there is provided a revision method, wherein the method comprises the further step of the revision system, upon input of a new set of translated texts, searching the translated texts of the new set for the presence of any translation errors previously stored in the at least one revision memories of the revision module.

According to a third aspect of the invention, there is provided a computer program product comprising computer-executable instructions for performing the revision method according to the second aspect of the invention when the program is run on a computer.

### Brief Description of the Drawings

Exemplary embodiments will now be described in more detail with respect to the drawings in which:
Figure 1 shows an embodiment of the revision system and method;
Figures 2 to 6 show different embodiments of the user interface of the revision system during different steps of the revision method; and
Figure 7 shows an embodiment of a suitable computing system for implementing the embodiments of the review system and method.

### Detailed Description of Embodiment(s)

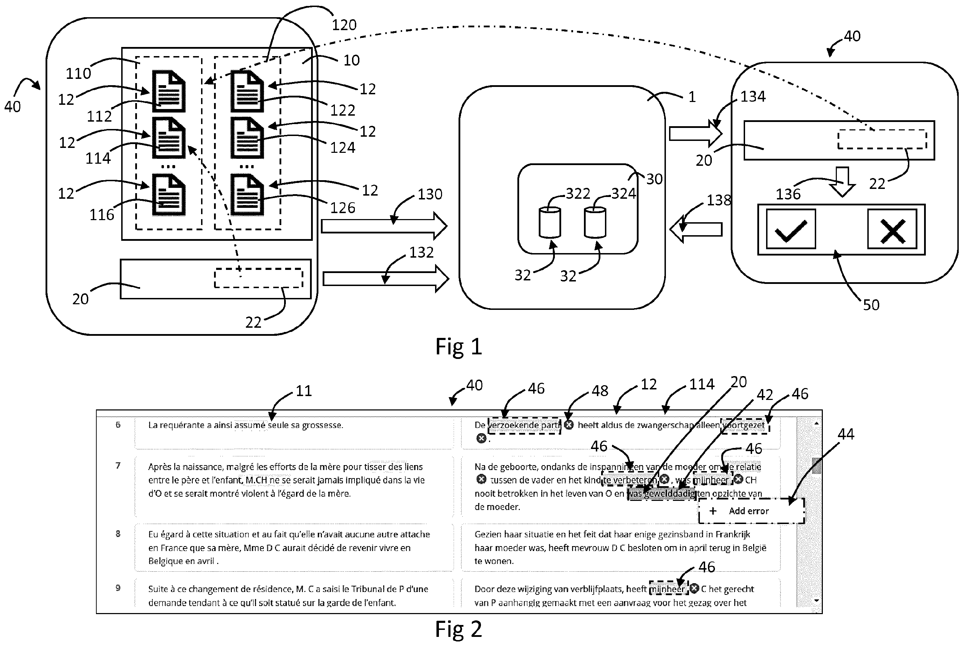

Figure 1 shows an embodiment of the revision system 1 for revising translated texts. As shown the revision system 1 receives a set 10 comprising of translated texts 12. According to the embodiment shown the set 10 comprises a first subset 110 of translated texts 112, 114, 116. This first subset 110 could for example comprise the translated texts 12 in a predetermined target language of fifty different translators of a first source text in a predetermined source language. This could for example be the result of a first test or assignment in a training context in which fifty students are each required to produce a translated text in this predetermined target language of a particular first source text in the predetermined source language for subsequent revision by a revisor. As further shown, according to this embodiment the set 10 comprises also a second subset 120 of translated texts 122, 124, 126. This second subset 120 could for example also comprise the translated texts 12 in a predetermined target language of fifty different translators of a different, second source text in a predetermined source language. This could for example be the result of a second test or assignment in a training context in which fifty students are each required to produce a translated text in this predetermined target language of a particular second source text in the predetermined source language for subsequent revision by a revisor. It is clear that, alternative embodiments are possible in which the revision system 1 receives a set 10 comprising a different number of translated texts 12, comprising a different number of subsets of such translated texts 12, etc. as long as in general the revision system 1 is configured to receive a set 10 comprising a plurality of translated texts 12. Typically, these translated texts 12 will be inputted to the revision system 1 in any suitable electronic form, for example by means of providing as input suitable electronic files comprising one or more of the translated texts 12. It is clear that according to exemplary embodiments the translated texts 12 of the set 10 can be input individually or in group to the revision system 1, and that according to still further exemplary embodiments translated texts 12 can be for example be added, removed, etc. from the set 10. It is however clear that still further alternative embodiments are possible, as long as the revision system 1 is configured to receive a set 10 comprising a plurality of such translated texts 12 in a suitable way that allows the revision system 1 to automatically and electronically process these translated texts during the revision method as described in more detail below. Although, the revision system 1 is especially advantageous in a context in which the set at least comprises one subset in which each translated text comprises a translation of a same source text by a different translator, it is clear that the revision system 1 can alternatively receive any suitable plurality of translated texts relating to any suitable number of one or more source texts.

As further shown, the revision system 1 further receives as input translation errors 20 of the translated texts 12 of the set 10. Figure 2 shows an embodiment of a user interface 40 by which a revisor is able to input translation errors 20. According to the embodiment shown in Figure 2, a segmented version of a source text 11 and a corresponding translated text 12 is shown side by side as generally known to a man skilled in the art. In this way a revisor is able to identify a translation error 20 in the translated text 12 efficiently. According to the example shown, the translated text 12, is for example the translated text 114 of the first subset 110 of the set 10 of the embodiment of Figure 1. According to the example shown, the revisor is able to input such an identified translation error 20 by selecting the translation error 20 in the displayed translated text 12. Such a selection 42 of the translation error could be performed by any suitable input means of the user interface, which allows for example to select, mark, highlight, etc. a particular portion of the translated text, for example by means of a suitable pointing, touch interface, etc. According to this embodiment after the selection 42 of the translation error 20 in the translated text 12 is established, the input of this selected 42 portion of the translated text 12 as a translation error 20 in the revision system 1 is finalized by means of a pop-up "Add Error" input validation button 44. It is further also clear that alternative suitable user interface elements could be used instead of the input validation button. It is further clear that the "Add Error", ... labels of the buttons 44, and other text content of the embodiment as shown in Figure 2, only serve to clarify the description as an exemplary label or other text content. It is clear that alternative labels and other text content are possible, such as for example in other languages, by making use of other suitable symbols, etc. According to the embodiment of Figure 2, upon activating this input validation button 44 the selected translation error 20 is provided to the revision system 1 as input. As shown in Figure 1, preferably the translation error 20 inputted to the revision system 1 also comprises a reference 22 to the translated text 12, from which the inputted translation error 20 originated. According to the embodiment described above with reference to Figures 1 and 2, the inputted translation error 20 of selection 42, thus also comprises a reference 22 to the translated text 114 of the set 10. It is further clear that alternative embodiments are possible, as long as in general the revision system 1 is configured to receive a set 10 comprising a plurality of translated texts 12; and translation errors 20 of the translated texts 12 of the set 10 as inputted by a revisor.

Although, according to the embodiment above input of a translation error 20 is described by means of a selected portion 42 of the translated text 12 as a translation error by means of highlighting, a marker, etc. this should be interpreted broadly, however should also exclude any translation errors 20 which do not comprise a non-empty, portion 42 of the translated text 12. More particularly, it should be clear that a particular category of translation errors generally referred to as omissions does not qualify as a translation error comprising a portion 42 of the translated text 12. Such an omission category translation error concerns the omission of one or more words from the translated text 12. It is thus clear that these missing words thus form the translation error 20. These missing words forming the translation error 20, are not part of the translated text 12, and thus do not form a portion of the translated text 12. Such an omission category of translation errors 20 can, for example according to the embodiment of Figure 2, be inputted by means of the user interface 40 by positioning a cursor, pointer, or any other suitable input element at the location in the translated text 12 where the missing words should have been provided. The cursor or pointer position itself thereby forming an indicator of such an omission category translation error 20. Subsequently, similar as described above, and subsequently the input of this indicated position of the translated text 12 as a translation error 20 in the revision system 1 can be finalized by means of for example a pop-up "Add Error" input validation button 44, similar as described above. It is clear that such a type of translation error 20 in general does not qualify as a translation error 20 comprising a portion of the translated text 20.

As further shown, according to the embodiment of Figure 1, the revision system 1 comprises a revision module 30 comprising at least one revision memory 32 configured to store the translation errors 20 associated with each of the translated texts 12. According to the embodiment shown, the revision module 30 comprises two revision memories 322, 324, however any other suitable number of revision memories 32 is possible. The first revision memory 322 could for example comprise a revision memory 322 created by the revisor currently performing the revision of the translated text. The second revision memory 324 could for example comprise a revision memory 324 created by another revisor, which was imported into the revision module by the current revisor in order to support the current revision. It is clear that alternative embodiments are possible, for example in which one or more revision memories are available to the revision system in a shared way, for example by means of importing or exporting such revision memories to the revision system 1.

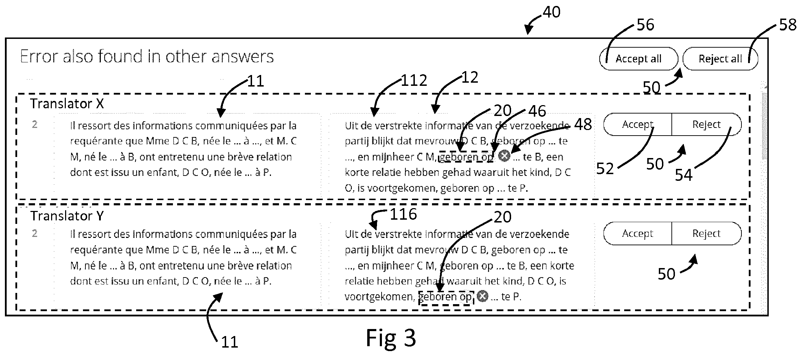

Upon input of a translation error 20 comprising a portion of one particular translated text 12 of the set 10, for example the translation error 20 comprising a portion 42 of translated text 114 as inputted as described above with reference to Figure 2, the revision system 1 will store in at least one revision memory 32 this translation error 20 associated with this particular translated text 114. Subsequently the revision system 1, will automatically search all other translated texts 12 of the set 10 for the presence of this translation error 20. According to the embodiment shown in Figure 3, the revision system 1, by means of a suitable user interface 40 presents the one or more other translated texts 112,116 in which this translation error 20 is found to the revisor. According to the embodiment shown in Figure 3, a particular translation error 20 is found in two other translated texts 112, 116 of the set 10 of translated texts 12 inputted and made available to the revision system 1. According to the embodiment shown in Figure 3, these other translated texts 112, 116 are presented in such a way that the revisor is provided in the user interface with a list of the relevant segment of the translated texts 112, 116 in which this translation error 20 was found during the search. As shown, the translation error 20 is preferably identified in this segment of the other translated texts 112, 116 by means of a suitable highlighting 46, marker, etc. This allows the revisor to quickly identify this translation error 20, while still being able to assess this translation error in the context of the relevant segment of the other translated texts 112, 116. As further shown, according to this embodiment, similar as described with reference to Figure 2, in an aligned way with the segment of the other translated texts 112, 116 there is also shown the corresponding segment of the source text 11. Although, as shown, an identifier of the other translated texts could be provided, such as for example an identifier of the translator which has provided the translated text, it is also possible to omit or anonymize such identifiers in order to increase objectivity of the revisor. Although, according to the embodiment shown, the user interface 40 shows segments of two other translated texts 112, 116 of the set 10 in which the search retrieved a previously inputted translation error 20 of the translated text 114, it is clear that alternative embodiments and situations are possible. It is for example possible, that a different number of other translated texts will be found, that a plurality of segments of the same other translated text of the set comprise this translation error will be found, that the results from the search will be shown in alternative ways than a list of relevant segments of the translated texts comprising the translation error, such as for example showing at least a part of the other translated texts in which the inputted translation error was found one at a time, etc.

It should further be clear that the above search and validation is only performed by the revision system for inputted translation errors 20 comprising a non-empty, selected portion of the translated text 12. Translation errors 20 of the omission error category, which do not comprise a portion of the translated text 12, when inputted as for example described above, are not searched for in the other translated texts 12 of the set 10. It is clear that such a search is not possible as such a type of translation error 20 lacks a portion of text of the currently revised translated text 12 of the set 10 to search for in the other translated texts of the set 10.

According to the embodiment of Figure 3, there are provided elements for providing validation input 50 to the revision system. As shown, by means of corresponding buttons 52, 54 of the user interface, the revisor is able to provide validation input 50 by selecting to "Accept" or "Reject" the translation error 20 as found in the other translated text 112, 114 for each occurrence of the translation error in the list on an individual basis. Other buttons 56, 58 of the user interface allow the revisor to provide validation input 50 for all the translation errors 20 found in the other translated texts 12 in a grouped way by accepting all or rejecting all the translation errors 20 of the other translated texts 12 as listed in the user interface 40. It is clear that alternative embodiments are possible as long as in general the revision system is configured to receive from the revisor validation input concerning validation of the translation error 20 when associated with the one or more other translated texts 12 thus presented to the revisor. It is further clear that the "Accept", "Reject", "Accept All", "Reject all", ... labels of the buttons 52, 54, 56, 58, and other text content of the embodiment as shown in Figure 3, only serve to clarify the description as an exemplary label or other text content. It is clear that alternative labels and other text content are possible, such as for example in other languages, by making use of other suitable symbols, etc.

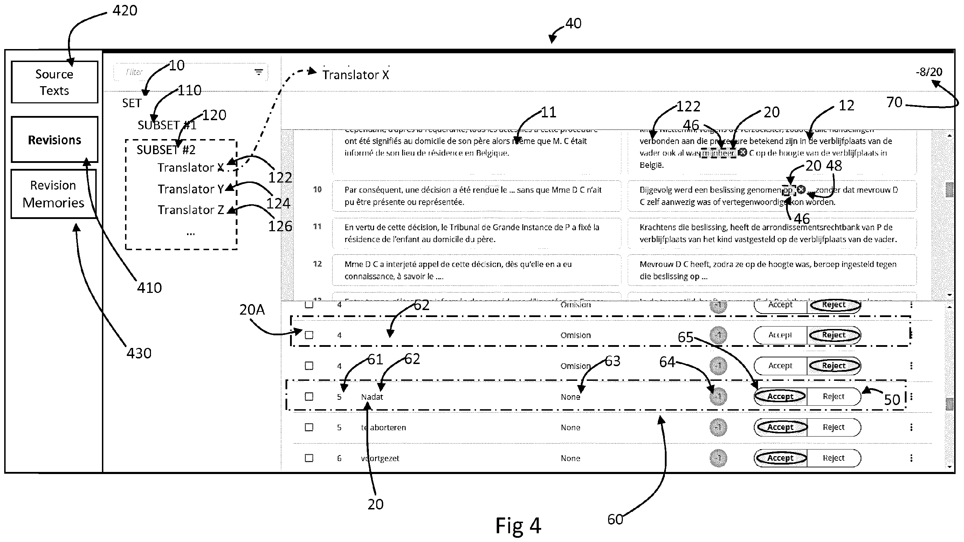

As will be explained with reference to the information presented in the embodiment of the user interface 40 of Figure 4 by the revision system 1, the revision system 1 will then respectively store in at least one revision memory 32 the translation errors 20 associated with the one or more other translated texts 12 in function of said validation input 50, as for example inputted by means of the embodiment of the user interface 40 of Figure 3. The embodiment of Figure 4, shows, as an example, the translated text 122 of subset 120 of the set 10 of the embodiment of Figure 1. As shown, according to this embodiment and similar as described with reference to Figure 2, the translated text 122 is presented in a segmented way aligned with the corresponding segments of the source text 11. As shown according to this embodiment, the translation errors 20 associated with this translated text 122 are preferably indicated by means of a suitable highlighting 46, marker, etc. in the translated text 122. It is clear that these translation errors 20 associated with this translated text 122, are shown in the user interface 40 by the revision system 1 in function of the translation errors 20 stored in at least one of the revision memories 32. It is further clear that some of these translation errors 20 associated with this translated text 20 can thus be the result of a translation error 20 for this particular translated text 122 as described above with reference to Figure 2. It is further also clear that alternatively some of these translation errors 20 could be the result of a subsequent search in the translated text 122 for a translation error 20 inputted for another translated text 12 of the set 10, similar as described above with reference to embodiment of Figure 3. Each of the highlighted translation errors 20 of the translated text 12 thus represents a translation error 20 associated with this translated text 12 as stored in at least one of the revision memories 32 of the revision module 30 of the revision system 1. As further shown, according to this embodiment, there is present an input element 48 in the form of a cross shaped input element 48 next to each highlighted 46 translation error 20 of the translated text 12 as displayed in the user interface 40. According to the embodiment shown in Figure 4, this input element 48 of the user interface 40, when activated by the revisor, allows removal of the corresponding translation error 20 associated with the translated text 12 from the at least one revision memory 32 of the revision module 30. Similar elements for highlighting 46 of translation errors 20 associated with a translated text 12 as stored in at least one revision memory 32 and elements for removal 48 of these translation errors 20 from such revision memories 32 are also shown in the embodiments discussed above with reference to Figures 2 and 3, and thus provide similar functionality of displaying in the user interface 40 the translation errors 20 associated with the translated texts 12 as stored in the at least one revision memory 32, or allowing for their removal therefrom.

As further shown in the embodiment of Figure 3, the user interface 40, below the translated text 112, lists the translation errors 20 associated with this translated text 112 as stored in the at least one revision memory 32. According to the embodiment shown, as shown, the revision memory 32 also holds associated error data 60 for each translation error 20. According to the embodiment shown, the associated error data 60 of each translation error for example comprises: a numerical identifier 61 of the segment of the translated text in which the error occurred, a specification 62 of the translation error 20 comprising the corresponding portion of the translated text 12 that forms this translation error 20, a predetermined error category 63 associated with the translation error 20, scoring data 64 comprising a numerical penalty associated with the translation error 20, validation data 65 comprising an indication of the inputted validation information 50 of the revisor, for example as explained above with reference to Figure 4. As shown, according to this embodiment the validation input 50 of the translation error 20 is provided by means of a user interface element, which also allows input or modification of this validation input 50. This is particularly beneficial in a situation wherein for example the translated texts are reviewed by a plurality of different revisors, for example in a system where revisions of each revisor are double-checked by another revisor. In such a case, after a first revision was performed by a first revisor, the inputted translation errors 20 can be efficiently validated and/or rejected by a second revisor by simply altering the validation input 50 associated with translation error 20, for example by altering the selected state of such a user interface input element. It is clear that alternative embodiments are possible, in which the revision system 1 is able to receive and store in at least one revision memory 32, further and/or alternative associated error data 60 in association with each translation error 20. Such associated error data 60 could for example comprise alternative forms of scoring data 64, as long as in general such scoring data comprising data from which a scoring of the translated text can be calculated. It is further also clear that according to the embodiment shown in Figure 3, also lists examples of omission type translation errors 20A which do not comprise a non-empty portion of the translated text 12 as described above. As shown, such a type of translation errors 20A comprises an empty specification 62 in its associated error data 60, as there is no non-empty portion of the translated text 12 that forms such a type of translation error 20A. However, as shown similarly as described above, also these inputted translation errors 20 can be provided with suitable user interface elements which allow for validation input 50. Similar as described above, this for example enables a second revisor to efficiently verify and/or modify validation input 50 associated with such translation errors 20A in a similar way as for the translation errors 20 which do comprise a portion of the translated text 12.

According to the embodiment shown in Figure 4, the scoring data of the translation errors 20 associated with the translated text 122 are accumulated thereby resulting in a scoring 70 of the translated text providing a numerical indicator of the accumulated penalties, versus a predetermined maximum number of allowable penalties. It is however clear that further alternative embodiments for scoring data 64 and calculation of a scoring 70 therefrom are possible as generally known to a man skilled in the art. The associated error data 60, according to still further embodiments could for example comprise feedback data comprising further data to inform the translator, for example of specific fields for further study, etc. According to still further alternatives the associated error data 60 could for example comprise the source language of the source text and target language of the translated text, in this way allowing to apply the translation errors 20 of the revision memories to translated texts of source texts which match this language pair and/or to allow for further analysis of a particular translation error in function of a particular language pair. According to still further alternatives the associated error data 60 could for example comprise a fragment of the source text that provided the cause for the translation error. Still further alternative embodiments of the associated error data 60 could for example comprise-a frequency and/or count of the occurrence of the translation error, thereby allowing analysis of the occurrence of a particular translation error, for example within the set 10 or a specific subset 110, 120 of the translated texts 12. Still further alternative embodiments of the associated error data 60 could for example comprise one or more predetermined error categories 63 and/or error sub-categories associated with the translation error 20.

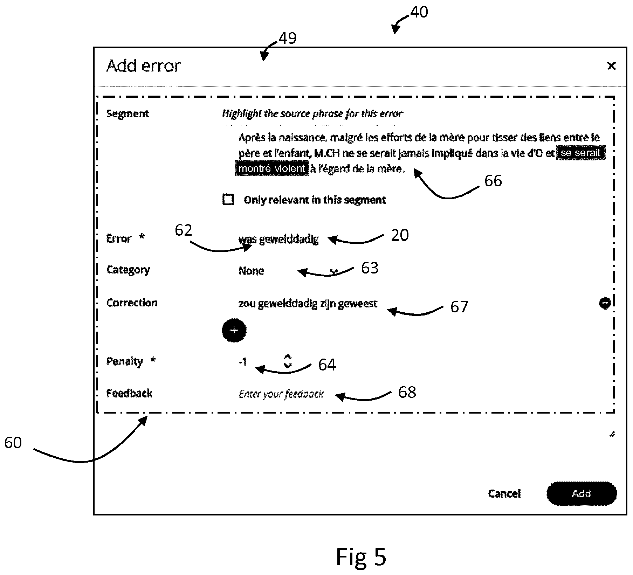

Figure 5 shows an embodiment of a user interface 40 by which the review system 1 allows for inputting the translation error 20 and some of its associated error data 60. According to a particular embodiment this user interface 40 could be shown to the revisor after inputting a translation error 20 associated with a translated text, for example similar as described with reference to Figure 2 above. According to such an embodiment after activating the pop-up "Add Error" input validation button 44 of Figure 2 the "Add error" input form 49 as shown in Figure 5 could be presented to the revisor to allow for input and/or modification of some of the associated error data 60. According to the embodiment shown in Figure 5, similar as described above, the input form 49 allows for input or modification of associated error data 60 in the at least one revision memory 32 in association with the translation error 20, associated error data 60 such as a specification 62 of the translation error 20 as present in the translated text 12, a predetermined error category 63, scoring data 64, data 66 concerning a relevant portion of the source text 11, correction data 67 and feedback data 68. It is clear that alternative embodiments of such a user interface 40 are possible as long as it provides suitable user interface elements that allow for the input and/or modification of the translation error 20 and/or its associated error data 60 in at least one revision memory 32 of the revision module 30 of the revision system 1. Such embodiments as described above are preferable as it generally allows the revision system 1 to verify that the revision memory 32 comprises at least partly the same associated error data 60, for each particular translation error 20 which is associated with a plurality of said translated texts 12. In this way a more consistent revision of the plurality of translated texts 12 can be assured, while still allowing, by means of the validation input 50 as described above the flexibility to fine-tune the revision for each of the translated texts 12 of the set 10 on an individual basis if needed.

It is thus clear from the description above that the revision system 1 in this way can be implemented as a computer implemented revision method. According to the embodiment shown in Figure 1 at step 130 the revision system receives a set 10 comprising a plurality of translated texts 12. The set of translated texts 12 can for example be inputted, this means made accessible to the revision system 1 in any suitable way by means of interaction with a suitable user interface 40. As shown in the embodiment of Figure 4, the user interface 40 for interaction with the revision system 1 shows a set 10 of translated texts, comprising two subsets 110, 120 each comprising a plurality of translated texts 122, 124, 126, which can be selected by the revisor to perform the revision method. According to a particular embodiment, the translated texts 12 could be inputted by a plurality of translators in response to assignments, tests, etc. which require the translation of particular source texts 11. According to the embodiment of Figure 4, these source texts 11 could for example be provided to the revision system 1 through a suitable source text section 420 of the user interface 40. The translated texts 12 can then be inputted or uploaded by each of the translators through a suitable user interface 40. It is clear that the computer implemented revision method can be executed as a standalone application, however it is preferably implemented in the form of a server client application in which components such as the revision module 30 are running on a server, and the users of the revision system can interact with it through suitable user interfaces 40 generated on their respective client devices, suitably connected to the server by means of a communication network, such as for example a LAN and/or WAN such as the internet. The user interface 40 could be made accessible through a suitable client application, such as for example a suitable browser, a mobile application, etc. According to such embodiments, the revision system 1 can be considered as a so-called cloud application, when it is running on and/or storing and processing its data on one or more remote servers accessible via the internet by means of a browser application on a user device. The user interface 40 and the elements described above according to particular embodiments could thus be seen as comprised within the revision system 1 or alternatively as suitably coupled to the revision system 1. It is further clear that the data of the revision system 1, such as for example the revision memories 32 can be stored in any suitable data structure accessible to the revision, such as for example a suitable database, key value store, object store or any other suitable data structure.

The embodiment of the revision method described above with reference to Figure 1 further comprises the step 132 of receiving translation errors 20 of the translated texts 12 of the set 10 as inputted by a revisor, such as for example described in more detail above with reference to the embodiments of Figures 2 and 4. As described above the revision method requires storing in at least one revision memory 32 of a revision module 30 the translation errors 20 associated with each of the translated texts 12. As shown, according to the embodiment of Figure 4, such revision memories 32 can be managed through a revision memory section 430 of the user interface 40, which for example allows for the import, export, selection, management of such revision memories 32. As described above, and shown in the embodiment of Figure 1, upon input of a translation error 20 for one particular translated text 12 of the set 10 at step 132, the computer implemented method will continue with the further step of storing in at least one revision memory 32 this translation error 20 associated with this particular translated text 12, for example similar as described with reference to the embodiment of Figures 2 and 4. Additionally, then, the computer implemented revision method will automatically search all other translated texts 12 of the set 10 for the presence of this translation error.

As shown in Figure 1, according to this embodiment, the method will then continue, at step 134, by presenting the one or more other translated texts 12 in which this translation error 20 is found to the revisor, for example similar as described with reference to the embodiment of Figure 3. According to the described embodiment of Figure 1, the revision method then continues at step 136 by receiving from the revisor validation input 50 concerning validation of this translation error 20 when associated with said one or more other translated texts 12 thus presented, for example also similar as described with reference to the embodiment of Figure 3. Then at step 138, according to the embodiment shown in Figure 1, the revision method continues by respectively storing in the at least one revision memory 32 the translation errors 20 associated with the one or more other translated texts 12 in function of the validation input 50, for example similar as described with reference to the embodiment of Figures 3 and 4.

Preferably, as described above with reference to embodiment of Figure 5, the revision method allows for receiving and storing in the at least one revision memory 32, in association with each translation error 20, associated error data 60 in such a way that it is verified that the revision memory 32 comprises at least partly the same associated error data 60, for each particular translation error 20 which is associated with a plurality of said translated texts 12.

It should be clear that the above described revision system and method operates on the basis of a revision module 30 comprising at least one revision memory 32. This differs from prior art systems which make use of a traditional translation memory that contains the correct translations for a certain phrase or sentence in the source text. A revision memory, as described in more detail above, comprises the translation errors or wrong translations as present in the translated texts 12. In contrast to the prior art systems, the revision system 1 as described above will thus not only automatically suggest translation errors 20 in the translated texts 12 of the set 10 to the revisor based on the translation error already present in the at least one revision memory, but will also automatically check, upon entry of new translation errors into the at least one revision memory 32, if these new translation errors also appear in previously revised translated texts 12, or other still to be revised translated texts 12 of the set 10. According to an exemplary use case, similar to the embodiment described in Figure 1, in which a revisor needs to revise a set 10 comprising a first subset 110 comprising fifty translated texts 12 of the same first source text 11. Upon input of a new translation error 20 when revising the 48^{th} translated text 12 of this first subset 110, the translation error 20, and its associated error data 60 such as for example correction data, scoring data, an error category, feedback data, etc. will be added to the at least one revision memory 32, and the revision system 1 will check all 47 previously revised translated texts 12 for the same translated error 20, and suggest to apply it to for example previously revised translated text number 23 and 36 as well, when the same translated error is found there too as a result of the search. Additionally, also the still unrevised translated texts number 49 and 50 will be presented with the suggestion to apply that same translation error 20 when it is found during the search. As described above, the validation input 50 associated with these suggested translation errors 20 in other translated texts 12, ensures that the revisor always has the final word and retains the possibility to accept or reject these suggested translation errors by the revision system 1 based on the at least one revision memory 32 of the revision module 30, while still ensuring that the associated computer implemented revision method guarantees that the revision of these fifty translated texts 12 has an increased level of objectivity and is based on uniform criteria as much as possible.

According to still a further embodiment it is possible to apply the revision memories 32 of the revision module 30 in an advantageous way such that at least one particular subset of the set 10 of translated texts 12 is no longer affected by following new translation errors 20 being input by the revisor. This is for example useful when for example a subset comprises translated texts of which the scoring was finalized and communicated to the translators and thus should remain unchanged. According to such an embodiment, the revision system 1 allows at least one subset of the set 10 comprising a plurality of translated texts 12 to be marked as freezed subsets. In accordance with the embodiment of Figure 1, the revisor could for example mark the first subset 110 as freezed, when the revision of all translated texts 12 of this first subset 110 is completed and the corresponding scoring and other feedback was communicated to the associated translators of these translated texts 12. When the revisor subsequently continues with for example the revision of the translated texts 12 of the second subset 120, upon entry of a new translation error 20, the revision system 1 will now only search for that same new translation error 20 in the other translated texts 12 of the set 10 which are not part of the first subset 110. This this means that the revision system 1 will only search for this new translation error 20 in the set 10 excluding the subset 110 which has been marked as freezed. In this way, such new translation errors 20 do not affect the entries in the revision memory 32 associated with the translated texts 12, and for example their associated scoring, of the at least one subset which was marked as freezed.

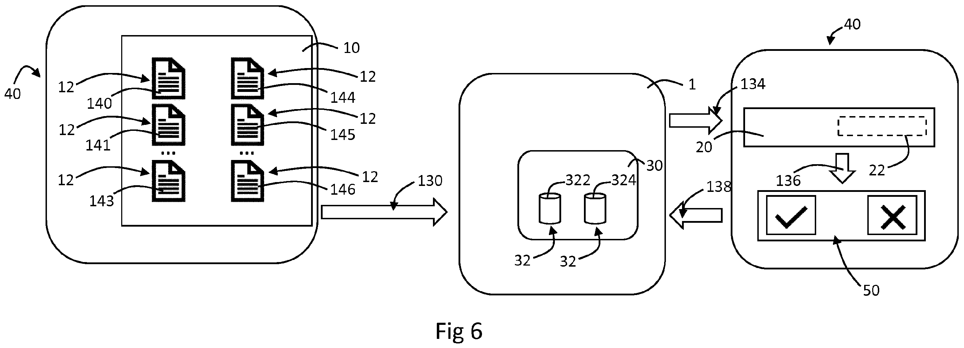

Figure 6 shows still a further embodiment of the review system and the review method, similar as described with respect to the embodiment of Figure 1. Similar elements have been provided with the same reference numbers and generally function in a similar way as described above. Figure 6 functions merely to clarify the preferred embodiment of the revision system and the corresponding embodiments of the revision method, in which not only consistency and efficiency is improved when inputting a new translation error of a particular translated text 12 for other translated texts 12 of this set 10, but also enables such an improvement across a plurality of sets 10 processed by the revision system and method. As shown, according to this embodiment, the revision system (1) comprises at least one revision memories 32, which already comprise translation errors 20 previously stored therein. This could for example be the result of input by the revisor of translation errors 20 during the embodiment of the revision method when applied to the set 10 of translated texts 112 - 116; 122 - 126 as for example described with reference to Figure 1. Alternatively, the at least one revision memory 32 of the revision module 30 could already comprise previously stored translation errors 20, when it for example results from such a revision memory 32 comprising one or more stored translation errors 20 that was imported into the revision system 1 or selected, etc. in order to subject a set 10 of translated texts 20 to the translation errors already stored therein during execution of a revision method. As shown, according to the embodiment of Figure 6, upon input of a new set 10 of translated texts 140 - 146 at step 130, preferably the revision system will search these translated texts 12 of the new set 10 for the presence of any translation errors 20 previously stored in the at least one revision memories 32 of the revision module 30. Similar as described above, with reference to the embodiment of Figure 3 with reference to newly inputted translation errors, also these previously entered translation errors 20, when found are preferably presented to the revisor for validation and storage in association with the new translated texts of the new set in which these previously stored translation errors are found. Briefly, this thus means, that in a similar way, at step 134, the revision system 1 presents the one or more translated texts 12 of the new set 10 in which such a previously stored translation error 20 is found to the revisor. At step 136, the revision system 1 then receives validation input 50 from the revisor concerning validation of these previously stored translation errors 20 when associated with the one or more translated texts 12 of the new set 10 thus presented. Then at step 138, the revision system 1, respectively stores these translation errors 20 associated with the one or more translated texts 12 of this new set 10 in function of the validation input 50 in the at least one revision memory 32 of the revision module 30. According to such an embodiment, also translation errors 20 previously stored in the revision memories 32 can be applied to a new set 10 of translated texts 12, by making use of functionality of the revision system 1 that is already available for the improved handling of input of new translation errors 20 comprising a part of a particular translated text of the set 10. According to such an embodiment there is not only achieved an improved level of consistency within the same set 10 of translated texts, but also the level of consistency of the revision method across a plurality of different sets 10 of translated texts 12 is improved. This is furthermore achieved without increasing complexity of the revision system 1. Additionally the efficiency of the revision method according to this embodiment is still further improved as identical or similar translation errors 20 already previously inputted into the revision memories 32, for example during revision of one or more previous sets 10 of translated documents 12 can be applied automatically to any new set 10 of translated texts without compromising the flexibility for the revisor to validate these previous translation errors 20 in function of the specific context of the translated texts 12 of this new set 10.

It is further clear that the embodiments of the computer implemented method can be implemented as a computer program product comprising computer-executable instructions for performing this computer implemented method when the program is run on a suitable computer. Another implementation could comprise a computer readable storage medium comprising such a computer program product. It is further also clear that the revision system can be implemented as a data processing system programmed for carrying out such a computer implemented method.

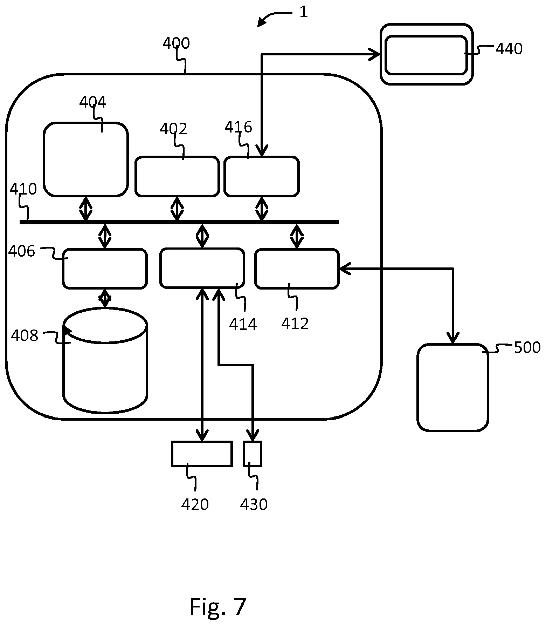

Figure 7 shows a suitable computing system 400 for performing steps according to the above embodiments of the review method, thereby implementing the above embodiment of the review system 1. Computing system 400 may in general be formed as a suitable general-purpose computer and comprise a bus 410, a processor 402, a local memory 404, one or more optional input interfaces 414, one or more optional output interfaces 416, a communication interface 412, storage element interface 406 and one or more storage elements 408. Bus 410 may comprise one or more conductors that permit communication among the components of the computing system. Processor 402 may include any type of conventional processor or microprocessor that interprets and executes programming instructions. Local memory 404 may include a random-access memory, RAM, or another type of dynamic storage device that stores information and instructions for execution by processor 402 and/or a read only memory, ROM, or another type of static storage device that stores static information and instructions for use by processor 404. Input interface 414 may comprise one or more conventional mechanisms that permit an operator to input information to the computing device 400, such as a keyboard 420, a mouse 430, a pen, voice recognition and/or biometric mechanisms, etc. Output interface 416 may comprise one or more conventional mechanisms that output information to the operator, such as a display 440, a printer 450, a speaker, etc. Communication interface 412 may comprise any transceiver-like mechanism such as for example an Ethernet interface, a wireless network interface, etc. that enables computing system 400 to communicate with other devices 500 and/or systems of the review system 1 and/or coupled to the review system 1. It is thus clear that for example, as already mentioned above, the revision system 1, could for example be implemented as a cloud application running on one or more remote servers which are made accessible via the internet through suitable communication interfaces and that revisors can access the user interface of the revision system 1 by means of for example a suitable browser application on another computing device also couplable to the internet by means of suitable communication interfaces, such as for example a PC, laptop, mobile device, etc. The communication interface 412 of computing system 400 may be connected to such another computing system by means of a local area network, LAN, a wide area network or Wan such as for example the internet, etc thereby forming network. Storage element interface 406 may comprise a storage interface such as for example a Serial Advanced Technology Attachment, SATA, interface or a Small Computer System Interface, SCSI, for connecting bus 410 to one or more storage elements 408, such as one or more local disks, for example SATA disk drives, and control the reading and writing of data to and/or from these storage elements 408. Although the storage elements 408 above is described as a local disk, in general any other suitable computer-readable media such as a removable magnetic disk, optical storage media such as a CD or DVD, -ROM disk, solid state drives, flash memory cards, ... could be used.

Although the present invention has been illustrated by reference to specific embodiments, it will be apparent to those skilled in the art that the invention is not limited to the details of the foregoing illustrative embodiments, and that the present invention may be embodied with various changes and modifications without departing from the scope thereof. The present embodiments are therefore to be considered in all respects as illustrative and not restrictive, the scope of the invention being indicated by the appended claims rather than by the foregoing description, and all changes which come within the scope of the claims are therefore intended to be embraced therein.

It will furthermore be understood by the reader of this patent application that the words "comprising" or "comprise" do not exclude other elements or steps, that the words "a" or "an" do not exclude a plurality, and that a single element, such as a computer system, a processor, or another integrated unit may fulfil the functions of several means recited in the claims. Any reference signs in the claims shall not be construed as limiting the respective claims concerned. The terms "first", "second", third", "a", "b", "c", and the like, when used in the description or in the claims are introduced to distinguish between similar elements or steps and are not necessarily describing a sequential or chronological order. Similarly, the terms "top", "bottom", "over", "under", and the like are introduced for descriptive purposes and not necessarily to denote relative positions. It is to be understood that the terms so used are interchangeable under appropriate circumstances and embodiments of the invention are capable of operating according to the present invention in other sequences, or in orientations different from the one(s) described or illustrated above.

## Claims

1. A revision system (1) for revising translated texts configured to receive:
- a set (10) comprising a plurality of translated texts (12); and
- translation errors (20) of the translated texts (12),
the revision system comprising:
- a revision module (30) comprising at least one revision memory (32) configured to store the translation errors (20) associated with translated texts (12),
**CHARACTERISED IN THAT** the revision system (1) is further configured to, upon input of a translation error (20) comprising a portion of one particular translated text (12) of the set (10):
- store in at least one revision memory (32) this translation error (20) associated with this particular translated text (12); and
- search the other translated texts (12) of the set (10) for the presence of this translation error (20).

2. A revision system according to claim 1, wherein the revision system (1) is further configured to:
- present the one or more other translated texts (12) in which this translation error (20) is found to the revisor.

3. A revision system according to claim 2, wherein the revision system (1) is further configured to:
- receive from the revisor validation input (50) concerning validation of said translation error (20) when associated with said one or more other translated texts (12) thus presented.

4. A revision system according to claim 3, wherein the revision system (1) is further configured to:
- respectively store in said at least one revision memory (32) said translation errors (20) associated with said one or more other translated texts (12) in function of said validation input (50).

5. A revision system according to any of the claims 1 to 4, wherein the revision system (1) is further configured to receive and store in said at least one revision memory (32), in association with each translation error (20), associated error data (60) comprising one or more of the following:
- scoring data (64) comprising data from which a scoring of the translated text can be calculated;
- correction data comprising data of the correct translation;
- feedback data comprising further data to inform the translator;
- source language of the source text and target language of the translated text;
- a fragment of the source text causing the translation error;
- a frequency and/or count of the occurrence of the translation error;
- one or more predetermined error categories (63) and/or error sub-categories associated with the translation error, and/or
wherein the revision system (1) is configured to verify that the revision memory (32) comprises at least partly the same associated error data (60), for each particular translation error (20) which is associated with a plurality of said translated texts (12).

6. A revision system according to any of the claims 1 to 5, wherein the revision system (1) is further configured to:
- mark at least one subset (110, 120) of the set (10) comprising a plurality of translated texts (12) as freezed;
- upon input of a translation error (20) for one particular translated text (12) of the set (10), only searching the other translated texts (12) of the set (10) which are not part of the at least one subset (110, 120) marked as freezed for the presence of this translation error (20).

7. A revision system according to any of the claims 1 to 6, wherein the revision system (1) is further configured, upon input of a new set (10) of translated texts (12), to search the translated texts (12) of the new set (10) for the presence of any translation errors (20) previously stored in the at least one revision memories (32) of the revision module (30).

8. A computer implemented revision method comprising the steps of:
- receiving a set (10) comprising a plurality of translated texts (12);
- receiving translation errors (20) of translated texts (12),
- storing in at least one revision memory (32) of a revision module (30) of the revision system (1) translation errors (20) associated with translated texts (12),
**CHARACTERISED IN THAT**
upon input of a translation error (20) comprising a portion of one particular translated text (12) of the set (10), the method comprises the further steps of:
- storing in at least one revision memory (32) this translation error (20) associated with this particular translated text (12); and
- searching the other translated texts (12) of the set (10) for the presence of this translation error (20).

9. A revision method according to claim 8, wherein the method comprises the further steps of:
- presenting the one or more other translated texts (12) in which this translation error (20) is found to the revisor.

10. A revision method according to claim 9, wherein the revision method comprises the further steps of:
- receiving from the revisor validation input (50) concerning validation of said translation error (20) when associated with said one or more other translated texts (12) thus presented.

11. A revision method according to claim 10, wherein the revision method comprises the further steps of:
- respectively storing in said at least one revision memory (32) said translation errors (20) associated with said one or more other translated texts (12) in function of said validation input (50).

12. A revision method according to any of the claims 8 to 11, wherein the revision method comprises the further step of receiving and storing in said at least one revision memory (32), in association with each translation error (20), associated error data (60) comprising one or more of the following:
- scoring data comprising data from which a scoring of the translated text can be calculated;
- correction data comprising data of the correct translation;
- feedback data comprising further data to inform the translator;
- source language of the source text and target language of the translated text;
- a fragment of the source text causing the translation error;
- a frequency and/or count of the occurrence of the translation error;
- one or more predetermined error categories and/or error sub-categories associated with the translation error, and/or
wherein the revision method comprises the further step of verifying that the revision memory (32) comprises at least partly the same associated error data (60), for each particular translation error (20) which is associated with a plurality of said translated texts (12).

13. A revision method according to any of the claims 8 to 12, wherein the method comprises the further steps of:
- marking at least one subset (110, 120) of the set (10) comprising a plurality of translated texts (12) as freezed;
- upon input of a translation error (20) for one particular translated text (12) of the set (10), only searching the other translated texts (12) of the set (10) which are not part of the at least one subset (110, 120) marked as freezed for the presence of this translation error (20).

14. A revision method according to any of the claims 8 to 13, wherein the method comprises the further step of the revision system (1), upon input of a new set (10) of translated texts (12), searching the translated texts (12) of the new set (10) for the presence of any translation errors (20) previously stored in the at least one revision memories (32) of the revision module (30).

15. A computer program product comprising computer-executable instructions for performing the revision method according to any of the claims claim 8 to 14 when the program is run on a computer.
